(19) Europäisches Patentamt
European Patent Office
Office européen des brevets

(11) **EP 2 963 991 A1**

(12) **DEMANDE DE BREVET EUROPEEN**

(43) Date de publication:
**06.01.2016 Bulletin 2016/01**

(21) Numéro de dépôt: **15174782.1**

(22) Date de dépôt: **01.07.2015**

(51) Int Cl.:
*H04W 76/04* (2009.01)     *H04W 52/02* (2009.01)
*H04W 52/44* (2009.01)     *H04W 74/08* (2009.01)
*H04L 5/00* (2006.01)

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats d'extension désignés:
**BA ME**
Etats de validation désignés:
**MA**

(30) Priorité: **02.07.2014 FR 1456304**

(71) Demandeur: **Commissariat à l'Énergie Atomique
et aux Énergies Alternatives
75015 Paris (FR)**
(72) Inventeurs:
• **KTENAS, Dimitri**
  **38340 Voreppe (FR)**
• **DE DOMENICO, Antonio**
  **38000 Grenoble (FR)**

(74) Mandataire: **Brevalex
56, Boulevard de l'Embouchure
B.P. 27519
31075 Toulouse Cedex 2 (FR)**

(54) **MÉTHODE DE TRANSMISSION DISCONTINUE POUR STATION DE BASE D'UNE PETITE CELLULE DANS UN RÉSEAU HÉTÉROGÈNE**

(57)     L'invention concerne une méthode de transmission discontinue pour station de base d'une petite cellule dans un réseau hétérogène. Selon l'état de remplissage du buffer ou la durée de vie des données, la station de base décide de transmettre les données dans une trame élémentaire ou au contraire de se mettre en veille pendant la durée de cette trame. Dans le cas, où elle décide de transmettre les données, elle s'assure préalablement qu'aucune station de base d'une petite cellule voisine n'est en train d'émettre. A défaut, elle se met en veille pour une durée pseudo-aléatoire avant de tenter une nouvelle transmission desdites données.

Fig.2

## Description

## DOMAINE TECHNIQUE

La présente invention concerne de manière générale le domaine des télécommunications cellulaires et plus particulièrement celui des réseaux hétérogènes dans lesquels coexistent des macro-cellules et des petites cellules (*small cells* dans la terminologie 3GPP/LTE-Advanced), notamment des pico-cellules et des femto-cellules.

## ÉTAT DE LA TECHNIQUE ANTÉRIEURE

Les systèmes cellulaires classiques de seconde ou de troisième génération font généralement appel au déploiement de cellules d'un seul et même type. En revanche, les systèmes cellulaires de 4$^{ème}$ génération tels que ceux obéissant à la norme « LTE-advanced » peuvent utiliser des couches superposées de cellules de tailles différentes. Ainsi, des petites cellules desservies par des stations de base de relativement faible puissance d'émission (de quelques Watts environ) peuvent coexister avec des macro-cellules conventionnelles (quelques dizaines de Watts). De plus, les petites cellules sont caractérisées par une consommation de puissance de l'ordre de la dizaine de Watts tandis que les macro-cellules peuvent consommer jusqu'à 1300 Watts. Les macro-cellules ont notamment pour fonction d'assurer la couverture et la gestion de la mobilité des utilisateurs alors que les petites cellules peuvent être activées dynamiquement pour faire face à un pic de trafic ou couvrir des zones de forte affluence (*hot spots).* Dans la suite nous dénommerons petites cellules, des cellules de taille plus faible que les macro-cellules classiques et coexistant avec ces dernières dans un réseau hétérogène (également dénommé « Het Net »). Ainsi, le terme « petite cellule » (*small cell)* est entendu dans la suite de manière générique et recouvre dans la suite aussi bien les notions de femto-cellules (*femtocells)* que de micro-cellules (*microcells)* voire de picocellules (*picocells).* Les petites cellules utilisent une fréquence porteuse différente de celle utilisée par la macro-cellule. Ainsi, il n'y a pas d'interférence issue de la macro-cellule sur les utilisateurs des petites cellules.

Pour fixer les idées, les petites cellules possèdent une couverture d'une dizaine de mètres à une centaine de mètres. Elles sont généralement déployées dans des environnements urbains ou résidentiels et installées dans des lieux publics de fort trafic ou de forte affluence. Elles peuvent être aussi utilisées pour améliorer le débit et la couverture dans des entreprises ou chez des particuliers.

La densité de petites cellules peut atteindre jusqu'à un millier par macro-cellule. Cette multiplication de petites cellules conduisant à une consommation importante d'énergie dans le réseau, on a recours à un mécanisme d'activation intelligente et dynamique de ces cellules pour limiter la consommation énergétique moyenne tout en garantissant la qualité de service (QoS) requise.

Un des mécanismes d'activation envisagés actuellement consiste à éteindre (ou à mettre en sommeil) la station de base servant une petite cellule lorsque celle-ci n'a pas de données à transmettre. Plus précisément, la station de base désactive certains composants de son étage RF en l'absence de données à transmettre sur la voie descendante. Un tel mode de transmission discontinue ou DTX (*Discontinuous Tansmission*) a été décrit dans l'article de P. Frenger et al. intitulé « Reducing energy consumption in LTE with cell DTX » publié dans IEEE Proc. of 73rd Vehicular Technology Conférence, pp. 1-5, 15-18 Mai 2011.

Ce mode de transmission discontinue est toutefois incompatible avec la nécessité de transmettre certains signaux pilotes et ce, en l'absence même de tout utilisateur actif dans la petite cellule. Ainsi, par exemple, la version 10 (release 10) de la norme 3GPP « LTE advanced » prévoit-elle de transmettre dans chaque sous-trame d'une trame radio (une trame radio LTE est constituée de 10 sous-trames ayant chacune une durée de 1 ms), des signaux pilotes dits signaux de référence spécifiques ou CSRS (*Cell Specific Reference Signals*) permettant entre autres la gestion de la mobilité des utilisateurs (mécanisme de recherche de cellule), l'estimation de canal descendant entre chaque antenne de la station de base et le terminal de l'utilisateur et l'évaluation de la qualité du canal sur le lien descendant.

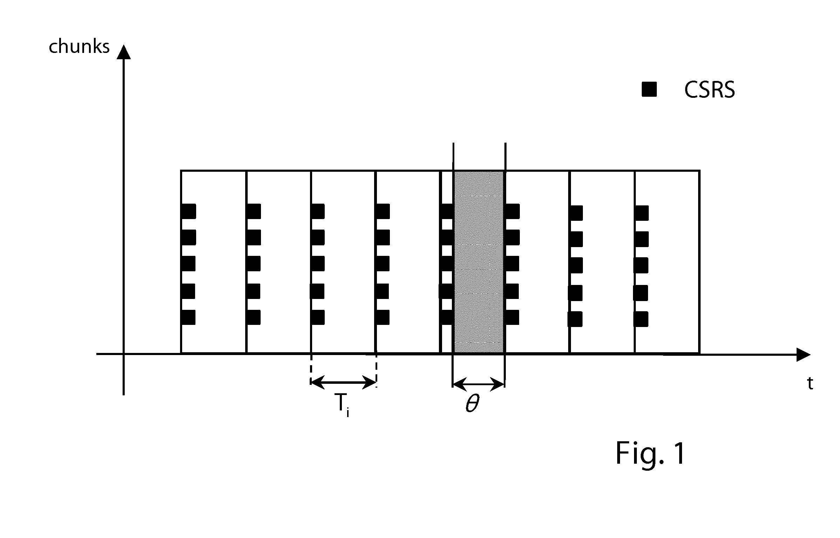

La Fig. 1 représente de manière schématique une trame radio pour la voie descendante d'un réseau LTE.

On rappelle que, dans un système LTE, la transmission sur la voie descendante est réalisée par OFDMA (*Orthogonal Frequency Division Multiple Access).* Les signaux CSRS sont en fait des symboles pilotes OFDM se répétant à chaque sous-trame $T_i$ comme indiqué sur la figure.

Du fait de la structure de la trame LTE, on comprend que l'interruption de transmission ne peut intervenir qu'entre les instants d'émission des symboles pilotes CSRS, c'est-à-dire pour une durée maximale $\theta$ entre ces instants. Ce mode particulier d'interruption de transmission entre symboles pilotes est connu dans la littérature sous la dénomination de micro-DTX (transmission micro-discontinue). On pourra notamment trouver une description du mode de transmission micro-DTX dans l'article de P. Frenger précité.

Toutefois, les gains en énergie d'une transmission micro-discontinue sont relativement limités car l'on peut montrer que l'étage RF de la station de base ne peut être désactivé qu'au maximum 53% du temps en absence de données à transmettre.

Des gains d'énergie plus importants peuvent être obtenus en adoptant une nouvelle structure de trame LTE, dite NCT (*New Carrier Type*), permettant d'adapter la signalisation à la charge de la cellule. Cette nouvelle trame est caractérisée par le fait que les signaux pilotes ne sont transmis dans une sous-trame que dans la mesure où des données sont à transmettre. L'adoption de cette nouvelle structure de trame permet d'interrompre la transmission jusqu'à 4 sous-trames consécutives, étant donné que des signaux de synchronisation doivent être transmis toutes les 5 sous-trames de manière à synchroniser les différents utilisateurs.

Une autre solution consiste à déporter la plupart des signaux de contrôle vers la macro-cellule. Celle-ci se charge alors de la gestion des fonctionnalités liées à la mobilité et à l'établissement de la connexion tandis que les petites cellules se chargent essentiellement de l'acheminement des données. Le déport des signaux de contrôle permet de pouvoir mettre en sommeil plus facilement les petites cellules et donc de réduire davantage la consommation énergétique. Cette stratégie est connue dans l'état de l'art sous la dénomination de macro-assistance. Une description de cette stratégie est donnée dans le livre blanc d'Ericsson intitulé « LTE release 12 », Janvier 2013. Celle-ci suppose toutefois de réaliser une double connectivité, au sens où le terminal de l'usager doit pouvoir établir une connexion à la fois avec la station de base de la macro-cellule et avec la station de base de la petite cellule dont il dépend.

Quelle que soit la solution de transmission discontinue adoptée, avec ou sans macro-assistance, les petites cellules s'activent et s'éteignent de manière désordonnée dans un réseau cellulaire hétérogène. Cette activation désordonnée nuit à la fiabilité de l'estimation du canal, cette estimation ne pouvant être réalisée que lorsque la petite cellule dont dépend l'utilisateur est active. En outre, lorsque plusieurs cellules voisines sont activées en même temps, les utilisateurs de ces cellules peuvent percevoir des pics d'interférence qui augmentent le taux d'erreur paquet et réduisent donc sensiblement les performances de transmission.

Le but de la présente invention est par conséquent de proposer un mode de transmission discontinue pour station de base d'une petite cellule dans un réseau hétérogène, qui ne présente pas les inconvénients de l'état de la technique, autrement dit, qui permette d'obtenir une réduction importante de la consommation énergétique du réseau sans réduction sensible des performances de transmission.

## EXPOSÉ DE L'INVENTION

La présente invention est définie par une méthode de transmission discontinue pour une station de base d'une petite cellule dans un réseau hétérogène, ladite station de base étant adaptée à transmettre des données sur la voie descendante au moyen de trames élémentaires, ladite méthode comprenant les étapes suivantes:

- la station de base détermine à partir de l'état de son buffer d'émission si des données sont à transmettre et,

- dans la négative, la station de base désactive tout ou partie de son étage RF pour la durée de la trame élémentaire ;
- dans l'affirmative, la station de base détermine si une station de base d'une petite cellule voisine est en train d'émettre, et

- si ce n'est pas le cas, transmet les données dans la trame élémentaire ;
- si c'est le cas, attend une durée pseudo-aléatoire avant de tenter une nouvelle transmission desdites données.

Avantageusement, la station de base détermine si des données sont à transmettre en comparant la quantité de données stockées dans le buffer avec une quantité minimale de données.

La quantité minimale de données peut être obtenue en fonction de la capacité du canal de la voie descendante et de la durée de la trame élémentaire.

Selon une variante, la station de base détermine si des données sont à transmettre en comparant la durée de vie restante des données stockées dans le buffer avec une valeur de seuil prédéterminée.

Selon une première variante, la station de base détermine si une station de base d'une petite cellule voisine est en train d'émettre en écoutant des signaux pilotes de cette dernière.

Selon une seconde variante, la station de base détermine si une station de base d'une petite cellule voisine est en train d'émettre à partir du rapport signal sur bruit plus interférence de sa voie montante.

Selon une troisième variante, la station de base détermine si une station de base d'une petite cellule voisine est en train d'émettre à partir de statistiques d'émission de cette dernière.

Selon une quatrième variante, la station de base détermine si une station de base d'une petite cellule voisine est en train d'émettre à partir d'informations transmises par cette dernière, via un canal de transmission filaire ou un canal de transmission radio.

Quelle que soit la variante, lorsque la station de base détermine qu'aucune station de base de cellule voisine n'est en train d'émettre, elle peut transmettre des symboles pilotes en sus de tout ou partie des données stockées dans le buffer.

En outre, lorsque la station de base détermine qu'une station de base d'une petite cellule voisine est en train d'émettre, la durée pseudo-aléatoire pour la nouvelle transmission peut être obtenue comme le produit d'une durée de base avec un nombre pseudo-aléatoire prenant ses valeurs dans un intervalle donné.

Cette durée de base peut être obtenue à partir d'un état de remplissage du buffer et/ou de la durée de vie restante des données qui y sont stockées.

En outre, lorsque la station de base détermine que des données sont à transmettre, celle-ci calcule avantageusement une fonction de coût dépendant de la consommation énergétique moyenne de la station de base et d'un indicateur de qualité de service, ladite fonction de coût étant une fonction croissante de la consommation énergétique moyenne et de l'indicateur de la qualité de service, et si la valeur de la fonction de coût est supérieure à une valeur maximale prédéterminée, la station de base désactive tout ou partie de son étage RF pour la durée de la trame élémentaire.

La fonction de coût est par exemple une combinaison linéaire de la consommation énergétique de la station de base et d'un indicateur de qualité de service.

Dans un exemple typique de réalisation, le réseau hétérogène est un réseau LTE advanced.

**BRÈVE DESCRIPTION DES DESSINS**

D'autres caractéristiques et avantages de l'invention apparaîtront à la lecture d'un mode de réalisation préférentiel de l'invention fait en référence aux figures jointes parmi lesquelles :

La Fig. 1 représente schématiquement la structure d'une trame radio LTE sur la voie descendante ;
La Fig. 2 représente schématiquement une méthode de transmission discontinue pour une station de base d'une petite cellule dans un réseau hétérogène, selon un premier mode de réalisation de l'invention;
La Fig. 3 représente schématiquement une méthode de transmission discontinue pour une station de base d'une petite cellule dans un réseau hétérogène, selon un second mode de réalisation de l'invention.

**EXPOSÉ DÉTAILLÉ DE MODES DE RÉALISATION PARTICULIERS**

On considérera dans la suite un réseau de télécommunication cellulaire hétérogène, composé d'une première couche de macro-cellules et d'une seconde couche de petites cellules au sens défini plus haut, par exemple un réseau de type LTE advanced. L'homme du métier comprendra que d'autres types de réseaux hétérogènes pourront être également envisagés, combinant différents réseaux d'accès, sans sortir du cadre de la présente invention. Par exemple, l'invention trouvera à s'appliquer à un réseau multi-RAT (RAT : *Radio Access Technology)* permettant d'accéder aux réseaux GSM/UMTS/LTE et WiFi. Une description de réseau multi-RAT pourra être trouvée dans l'article de P. Xing *et al.,* intitulé « Multi-RAT network architecture », Wireless World Research Forum, version 2.0, Novembre 2013.

Quel que soit le réseau hétérogène envisagé, on supposera que chaque petite cellule du réseau est servie par une station de base qui peut être activée ou mise en sommeil de manière dynamique. Par activation/mise en sommeil d'une station de base, on entend l'activation/la mise en sommeil de tout ou partie de l'étage RF de son émetteur, en particulier des amplificateurs de puissance que celui-ci comporte. En sus de l'étage RF (ou d'une partie seulement de celui-ci), certains circuits de l'étage de modulation (étage de modulation OFDM dans le cas d'un réseau LTE advanced) peuvent être également activés/mis en sommeil.

On supposera en outre que les données sont transmises sous forme de trames élémentaires (par exemple des sous-trames dans un système LTE).

Le principe de l'invention est de ne pas activer la station de base lorsque celle-ci n'a pas de données à transmettre sur la voie descendante et, dans le cas inverse, de vérifier que les stations de base des petites cellules voisines ne sont pas en train d'émettre, avant de transmettre les données, et le cas échéant des symboles pilotes, dans une trame élémentaire.

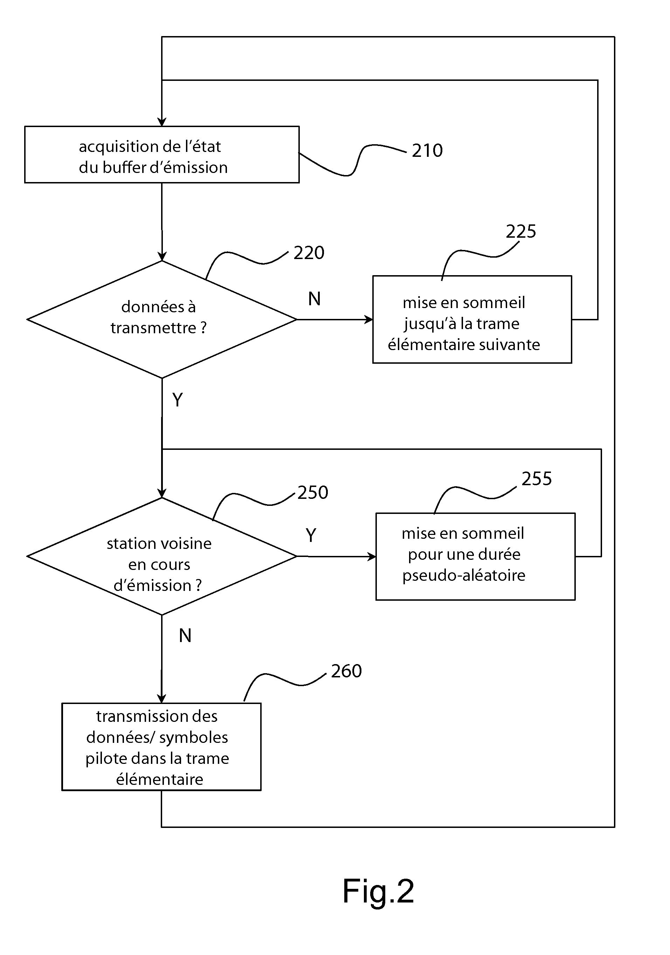

Plus précisément la Fig. 2 représente une méthode de transmission discontinue pour une station de base d'une petite cellule, selon un premier mode de réalisation de l'invention.

A l'étape 210, la station de base acquiert l'état de son buffer d'émission.

A l'étape 220, la station de base vérifie l'état de ce buffer. La vérification de l'état du buffer peut consister simplement à vérifier la présence d'une quantité minimale de données à transmettre. Lorsque la quantité de données est suffisante, la station de base passe à l'étape 250. La quantité est jugée suffisante si elle supérieure à une quantité minimale de données, fonction de la capacité de la liaison descendante et de la durée de la trame élémentaire. Si la quantité de données est insuffisante, la station de base se met en sommeil en 225 jusqu'au début de la trame élémentaire suivante, en désactivant tout ou partie de son étage RF. Toutefois, même si la quantité de données est insuffisante mais que la durée de vie restante de certaines données dans le buffer est inférieure à un seuil prédéterminé (contrainte de latence pour des données temps réel par exemple), la station de base passe encore à l'étape 250. Selon une variante de réalisation, on pourra prévoir que le buffer est scindé en deux parties, une première partie contenant les données soumises à une contrainte de latence (par exemple flux temps réel) et une seconde partie contenant les autres données. Lorsque la durée de vie restante des données dans la première partie du buffer est inférieure audit seuil mais que la quantité de ces données est inférieure à la quantité minimale précitée, on les complète par des données stockées dans la seconde partie, à concurrence de ladite quantité minimale, avant de passer à l'étape 250.

A l'étape 250, la station de base détermine si une station de base d'une petite cellule voisine est en train d'émettre.

Selon une première variante, la station de base peut écouter des signaux pilotes émis par les stations de base avoisinantes. Si elle détecte la présence de tels signaux pilotes, elle en déduit qu'au moins une station de base d'une cellule voisine est en cours de transmission.

Selon une seconde variante, elle mesure le rapport signal sur bruit plus interférence (SINR) sur la voie montante. Si ce rapport est supérieur à un niveau prédéterminé, elle en conclut qu'une émission est en cours dans une petite cellule voisine.

Selon une troisième variante, la station de base utilise les statistiques d'émission des stations de base des petites cellules voisines pour prédire si une émission aura lieu ou non dans l'une d'entre elles pendant la trame élémentaire. Ces statistiques peuvent avoir été établies à l'aide de campagnes de mesure préalables ou bien résulter d'un apprentissage au fur et à mesure des tentatives successives de transmission.

Enfin, selon une quatrième variante, si un échange d'informations entre stations de base de petites cellules voisines est possible, que ce soit par voie filaire ou par un canal radio dédié, chaque station de base peut être directement informée qu'une station de base voisine est en train d'émettre. Cet échange d'informations peut être réalisé de station de base à station de base ou coordonné localement par une station de contrôle en charge d'un ensemble (cluster) de petites cellules voisines. La station de contrôle peut n'être qu'une station de base particulière. Il est à noter que, dans ce cas, d'autres informations peuvent être échangées entre cellules de base voisines, notamment les états de leurs buffers respectifs ou les contraintes de latence de leurs données respectives. Ainsi, grâce à ces informations, lorsque plusieurs stations de base voisines s'apprêtent à émettre simultanément, un arbitrage peut être réalisé, soit de manière distribuée, soit de manière centralisée, pour déterminer celle qui émettra en priorité.

Quelle que soit la variante envisagée, si la station de base détermine qu'une station de base d'une petite cellule voisine est en cours d'émission, elle se met en sommeil pour une durée pseudo-aléatoire en 255.

Cette durée pseudo-aléatoire peut être proportionnelle à une durée de base qui est fonction des contraintes de latence des données stockées dans le buffer (ou dans sa première partie, dans la variante évoquée plus haut) et/ou de l'état de remplissage du buffer. Ainsi, cette durée de base sera d'autant plus courte que la durée de vie restante des données sera faible et/ou que le buffer sera rempli. La durée pseudo-aléatoire peut être calculée comme le produit de la durée de base par un nombre pseudo-aléatoire obtenu par tirage au sein d'un intervalle donné.

Au terme de cette durée pseudo-aléatoire, la station de base retourne à l'étape 250 pour une nouvelle tentative de transmission.

En revanche, si à l'étape 250, la station de base détermine qu'aucune station de base de petite cellule voisine ne transmet de données, elle passe à l'étape de transmission 260.

A l'étape 260, la station de base transmet pendant la trame élémentaire courante, les données stockées dans son buffer, sur la voie descendante. Elle peut également transmettre pendant cette même trame élémentaire des symboles pilotes permettant aux utilisateurs de la petite cellule d'effectuer une estimation de canal. Cette estimation de canal peut ensuite être envoyée à la station de base sous la forme d'un indicateur d'état de canal ou CSI (*Channel State Indicator).* La station de base peut choisir de transmettre ou non des symboles pilotes avec les données selon qu'elle a besoin ou non de mettre à jour sa connaissance de l'état du canal. Ce choix peut notamment dépendre de la qualité de service (QoS) requise, de l'état du buffer tel que défini précédemment, et de la qualité du canal radio (atténuation, présence ou absence d'interférents). On comprendra en effet que si la qualité de service est élevée et/ou si les données à transmettre appartiennent à un trafic temps réel, des symboles pilotes doivent être transmis avec les données dans la trame élémentaire.

Au terme de la transmission de la trame élémentaire, on retourne à l'étape 210 pour une nouvelle acquisition de l'état du buffer.

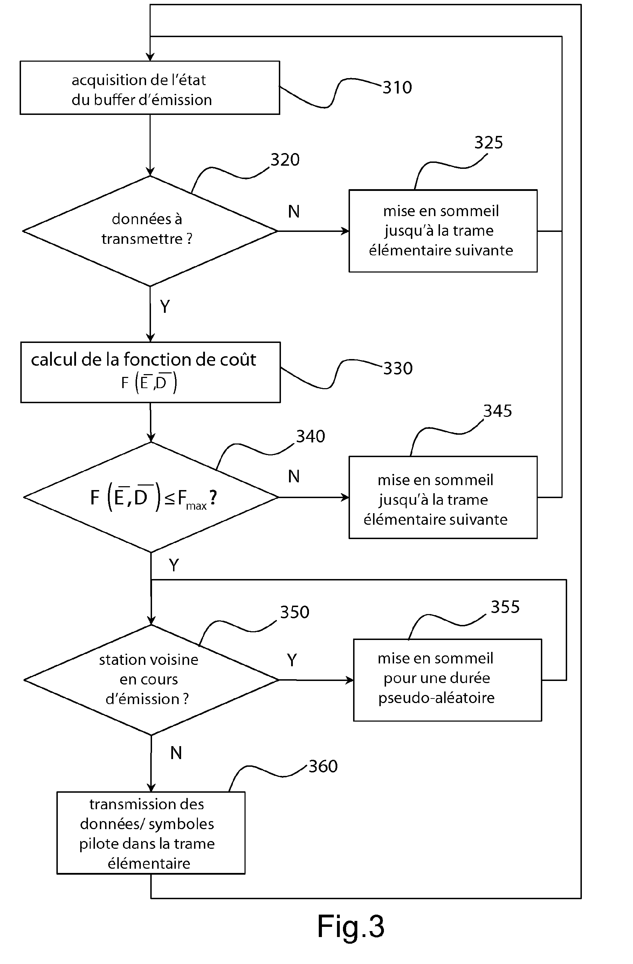

La Fig. 3 représente une méthode de transmission discontinue pour une station de base d'une petite cellule, selon un second mode de réalisation de l'invention.

Les étapes 310 à 360 sont identiques aux étapes 210 à 260 et leur description sera donc omise ici.

Le second mode de réalisation diffère du premier mode de réalisation en ce que la transmission de données sur la voie descendante est assujettie à la réalisation d'une condition supplémentaire à l'étape 330. En effet, à cette étape, on calcule une fonction de coût dépendant de la consommation énergétique moyenne de la station de base et d'un indicateur de qualité de service (QoS). Selon le cas envisagé, cet indicateur de qualité de service peut être défini comme l'inverse de la latence moyenne des paquets transmis sur la voie descendante ou du taux d'erreur paquet, ou encore comme le débit binaire moyen. De manière générale, la fonction de coût est une fonction croissante de la consommation énergétique moyenne de station de base et de l'indicateur de qualité de service observée sur la voie descendante.

Par exemple, la fonction de coût pourra s'exprimer sous la forme d'une combinaison linéaire :

$$F(\bar{E}, \bar{D}) = \gamma \bar{E} + (1 - \gamma)\bar{D}$$

où $\bar{E}$ est l'énergie moyenne consommée par la station de base, $\bar{D}$ est l'indicateur de qualité de service précité et γ est un paramètre compris entre 0 et 1 pondérant l'importance relative respectivement donnée à la consommation énergétique et à la qualité de service. D'autres expressions de la fonction de coût pourront être envisagées par l'homme du métier sans sortir du cadre de la présente invention, par exemple une combinaison multiplicative du type:

$$F(\bar{E}, \bar{D}) = \bar{E}^{\gamma} \bar{D}^{1-\gamma}$$

La fonction de coût peut ne pas être recalculée entièrement à chaque trame élémentaire mais simplement être mise à jour au moyen d'un filtre passe bas récursif avec facteur d'oubli. Alternativement, la fonction de coût peut être préalablement calculée et ses valeurs stockées dans une table (*look-up table)* indexée par l'énergie moyenne et l'indicateur de service.

A l'étape 340, on vérifie si le coût est inférieur à un coût maximal prédéterminé. Si c'est bien le cas, on passe à l'étape 350 pour une tentative de transmission. A défaut, la station de base est mise en sommeil en 355 jusqu'au début de la trame élémentaire suivante.

**Revendications**

**1.** Méthode de transmission discontinue pour une station de base d'une petite cellule dans un réseau hétérogène, ladite station de base étant adaptée à transmettre des données sur la voie descendante au moyen de trames élémentaires, **caractérisée en ce que** :

- la station de base détermine (220, 320) à partir de l'état de son buffer d'émission si des données sont à transmettre et,
- dans la négative, la station de base désactive (225, 325) tout ou partie de son étage RF pour la durée de la trame élémentaire ;
- dans l'affirmative, la station de base détermine (250, 350) si une station de base d'une petite cellule voisine est en train d'émettre, et

• si ce n'est pas le cas, transmet (260, 360) les données dans la trame élémentaire ;
• si c'est le cas, attend une durée pseudo-aléatoire (255, 355) avant de tenter une nouvelle transmission desdites données.

**2.** Méthode de transmission discontinue selon la revendication 1, **caractérisée en ce que** la station de base détermine si des données sont à transmettre en comparant la quantité de données stockées dans le buffer avec une quantité minimale de données.

**3.** Méthode de transmission discontinue selon la revendication 2, **caractérisée en ce que** la quantité minimale de données est obtenue en fonction de la capacité du canal de la voie descendante et de la durée de la trame élémentaire.

**4.** Méthode de transmission discontinue selon la revendication 1, **caractérisée en ce que** la station de base détermine si des données sont à transmettre en comparant la durée de vie restante des données stockées dans le buffer avec une valeur de seuil prédéterminée.

**5.** Méthode de transmission discontinue selon l'une des revendications précédentes, **caractérisée en ce que** la station de base détermine si une station de base d'une petite cellule voisine est en train d'émettre en écoutant des signaux pilotes de cette dernière.

**6.** Méthode de transmission discontinue selon l'une des revendications 1 à 4, **caractérisée en ce que** la station de base détermine si une station de base d'une petite cellule voisine est en train d'émettre à partir du rapport signal sur bruit plus interférence de sa voie montante.

**7.** Méthode de transmission discontinue selon l'une des revendications 1 à 4, **caractérisée en ce que** la station de base détermine si une station de base d'une petite cellule voisine est en train d'émettre à partir de statistiques d'émission de cette dernière.

**8.** Méthode de transmission discontinue selon l'une des revendications 1 à 4, **caractérisée en ce que** la station de base détermine si une station de base d'une petite cellule voisine est en train d'émettre à partir d'informations transmises par cette dernière, via un canal de transmission filaire ou un canal de transmission radio.

**9.** Méthode de transmission discontinue selon l'une des revendications précédentes, **caractérisée en ce que** lorsque la station de base détermine qu'aucune station de base de cellule voisine n'est en train d'émettre, transmet des symboles pilotes en sus de tout ou partie des données stockées dans le buffer.

**10.** Méthode de transmission discontinue selon l'une des revendications précédentes, **caractérisée en ce que** lorsque la station de base détermine qu'une station de base d'une petite cellule voisine est en train d'émettre, la durée pseudo-aléatoire pour la nouvelle transmission est obtenue comme le produit d'une durée de base avec un nombre pseudo-aléatoire prenant ses valeurs dans un intervalle donné.

**11.** Méthode de transmission discontinue selon la revendication 10, **caractérisée en ce que** la durée de base est obtenue à partir d'un état de remplissage du buffer et/ou de la durée de vie restante des données qui y sont stockées.

**12.** Méthode de transmission discontinue selon l'une des revendications précédentes, **caractérisée en ce que**, lorsque la station de base détermine que des données sont à transmettre, celle-ci calcule (330) une fonction de coût dépendant de la consommation énergétique moyenne de la station de base et d'un indicateur de qualité de service, ladite fonction de coût étant une fonction croissante de la consommation énergétique moyenne et de l'indicateur de la qualité de service, et si la valeur de la fonction de coût est supérieure à une valeur maximale prédéterminée (340), la station de base désactive (345) tout ou partie de son étage RF pour la durée de la trame élémentaire.

**13.** Méthode de transmission discontinue selon l'une des revendications précédentes, **caractérisée en ce que** la fonction de coût est une combinaison linéaire de la consommation énergétique de la station de base et d'un indicateur de qualité de service.

**14.** Méthode de transmission discontinue selon l'une des revendications précédentes, **caractérisée en ce que** le réseau hétérogène est un réseau LTE advanced.

Fig. 1

acquisition de l'état du buffer d'émission — 210

données à transmettre ? — 220

N → mise en sommeil jusqu'à la trame élémentaire suivante — 225

Y

station voisine en cours d'émission ? — 250

Y → mise en sommeil pour une durée pseudo-aléatoire — 255

N

transmission des données/ symboles pilote dans la trame élémentaire — 260

Fig.2

acquisition de l'état
du buffer d'émission — 310

données à
transmettre ?    N →    mise en sommeil
jusqu'à la trame
élémentaire suivante — 325

320

Y

calcul de la fonction de coût
$F\left(\overline{E},\overline{D}\right)$ — 330

$F\left(\overline{E},\overline{D}\right) \leq F_{max}$ ?    N →    mise en sommeil
jusqu'à la trame
élémentaire suivante — 345

340

Y

station voisine
en cours
d'émission ?    Y →    mise en sommeil
pour une durée
pseudo-aléatoire — 355

350

N

transmission des
données/ symboles
pilote dans la trame
élémentaire — 360

Fig.3

Europäisches
Patentamt

European
Patent Office

Office européen
des brevets

**RAPPORT DE RECHERCHE EUROPEENNE**

Numéro de la demande

EP 15 17 4782

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | PRASAD ATHUL ET AL: "Energy efficient small cell activation mechanism for heterogeneous networks", 2013 IEEE GLOBECOM WORKSHOPS (GC WKSHPS), IEEE, 9 décembre 2013 (2013-12-09), pages 754-759, XP032599834, DOI: 10.1109/GLOCOMW.2013.6825079 * abrégé * * figure 1 * * sections II-IV * | 1-14 | INV. H04W76/04 H04W52/02 H04W52/44 H04W74/08 ADD. H04L5/00 |
| Y | US 2014/105138 A1 (KIM JIHWAN [KR] ET AL) 17 avril 2014 (2014-04-17) * figure 4 * * alinéas [0018] - [0020] * * alinéas [0074] - [0084] * | 1-14 | |
| A | YONG SHENG SOH ET AL: "Energy Efficient Heterogeneous Cellular Networks", IEEE JOURNAL ON SELECTED AREAS IN COMMUNICATIONS, IEEE SERVICE CENTER, PISCATAWAY, US, vol. 31, no. 5, 1 mai 2013 (2013-05-01), pages 840-850, XP011500551, ISSN: 0733-8716, DOI: 10.1109/JSAC.2013.130503 * sections II.E, III.A, III.B * | 1-14 | DOMAINES TECHNIQUES RECHERCHES (IPC) H04W H04L |
| A,D | PÅL FRENGER ET AL: "Reducing Energy Consumption in LTE with Cell DTX", VEHICULAR TECHNOLOGY CONFERENCE (VTC SPRING), 2011 IEEE 73RD, IEEE, 15 mai 2011 (2011-05-15), pages 1-5, XP031896637, DOI: 10.1109/VETECS.2011.5956235 ISBN: 978-1-4244-8332-7 * le document en entier * | 1-14 | |

Le présent rapport a été établi pour toutes les revendications

| Lieu de la recherche | Date d'achèvement de la recherche | Examinateur |
|---|---|---|
| La Haye | 2 novembre 2015 | Papadogiannis, A |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 15 17 4782

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

02-11-2015

| Document brevet cité au rapport de recherche | Date de publication | Membre(s) de la famille de brevet(s) | Date de publication |
|---|---|---|---|
| US 2014105138 A1 | 17-04-2014 | AUCUN | |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **P. FRENGER et al.** Reducing energy consumption in LTE with cell DTX. *IEEE Proc. of 73rd Vehicular Technology Conférence,* 15 Mai 2011, 1-5